# FASCICULE DE BREVET EUROPEEN

(11) **EP 1 696 776 B1**
(45) Date de publication et mention de la délivrance du brevet: **02.01.2008**
(21) Numéro de dépôt: 04816456.0
(22) Date de dépôt: 21.12.2004
(51) Int. Cl.: A47J 43/07

(54) **APPAREIL ELECTROMENAGER DE PREPARATION CULINAIRE COMPORTANT UN OUTIL DE TRAVAIL ROTATIF ET UN COUVERCLE INTERMEDIAIRE DE SECURITE**
ELEKTRISCHES HAUSHALTSGERÄT FÜR DIE NAHRUNGSMITTELZUBEREITUNG MIT EINEM DREHWERKZEUG UND EINER SICHERHEITSZWISCHENABDECKUNG
ELECTRIC HOUSEHOLD APPLIANCE FOR FOOD PREPARATION, COMPRISING A ROTARY WORKING TOOL AND AN INTERMEDIATE SAFETY COVER

(30) Priorité: 22.12.2003 FR 0315155
(43) Date de publication de la demande: 06.09.2006
(73) Titulaire: SEB S.A., 69130 Ecully (FR)
(72) Inventeur: BARRIER, Nöel, F-53470 Chalons Du Maine (FR); CHARLES, Patrick, F-65290 Louey (FR); SMIT, Robert, F-65290 Louey (FR)
(74) Mandataire: Kiehl, Hubert
(86) Numéro de dépôt international: PCT/FR2004/003324
(87) Numéro de publication internationale: WO 2005/065506

(56) Documents cités:
- FR-A- 2 729 588
- FR-A- 2 756 477

## Description

La présente invention concerne le domaine technique des appareils électroménagers de préparation culinaire comportant un récipient de travail recevant un outil de travail rotatif, un boîtier moteur disposé sur le récipient de travail, et un couvercle intermédiaire de sécurité disposé entre le récipient de travail et le boîtier moteur.

De tels appareils sont généralement équipés de dispositifs de sécurité prévus pour empêcher le fonctionnement de l'appareil en l'absence du couvercle intermédiaire de sécurité et/ou du récipient de travail. Il est connu du document FR 2 729 588 un appareil comportant un interrupteur de sécurité agencé dans le boîtier moteur, cet interrupteur de sécurité étant actionné par un couvercle intermédiaire de sécurité déformé lors de sa mise en place sur le récipient de travail. En l'absence du récipient de travail, le couvercle intermédiaire de sécurité ne peut actionner l'interrupteur. En l'absence du couvercle intermédiaire de sécurité, l'interrupteur ne peut être actionné. Le couvercle intermédiaire de sécurité comporte une pluralité de portions latérales déformables. Une telle configuration permet d'éviter la présence de pièces mobiles dans le couvercle de sécurité. Toutefois le vieillissement de la matière du couvercle intermédiaire de sécurité peut affecter la déformabilité des portions latérales et compromettre le bon fonctionnement de l'appareil. De plus une telle configuration ne permet pas d'obtenir une étanchéité satisfaisante entre le récipient de travail et le couvercle de sécurité. En outre la mise en place du couvercle intermédiaire de sécurité sur le récipient de travail peut s'avérer délicate.

Le but de la présente invention est de proposer un appareil électroménager de préparation culinaire du type précité, comportant un dispositif de sécurité interdisant le fonctionnement de l'appareil en l'absence du récipient de travail, qui soit particulièrement fiable.

Un autre but de la présente invention est de proposer un appareil électroménager de préparation culinaire du type précité, comportant un dispositif de sécurité interdisant le fonctionnement de l'appareil en l'absence du récipient de travail et du couvercle intermédiaire de sécurité, qui soit particulièrement fiable.

Un autre but de la présente invention est de proposer un appareil électroménager de préparation culinaire du type précité, comportant un dispositif de sécurité dans lequel le couvercle intermédiaire de sécurité est dépourvu de pièce mobile.

Un autre but de la présente invention est de proposer un appareil électroménager de préparation culinaire du type précité, comportant un dispositif de sécurité dans lequel l'étanchéité entre le couvercle intermédiaire de sécurité et le récipient de travail est améliorée.

Un autre but de la présente invention est de proposer un appareil électroménager de préparation culinaire du type précité, comportant un dispositif de sécurité dans lequel la mise en place du couvercle intermédiaire de sécurité sur le récipient de travail est améliorée.

Ces buts sont atteints avec un appareil électroménager de préparation culinaire comprenant un récipient de travail, un couvercle intermédiaire de sécurité, un boîtier supérieur logeant un moteur prévu pour entraîner en rotation un outil de travail rotatif disposé dans le récipient de travail, le moteur étant associé à des moyens de commande logés dans le boîtier supérieur, les moyens de commande comportant un interrupteur susceptible d'être actionné par un organe de détection monté mobile entre une position abaissée et une position relevée contre un moyen de rappel, le couvercle intermédiaire de sécurité comportant une cale prévue actionner l'organe de détection, du fait que montée la cale est flottante la cale étant mobile entre une position abaissée et une position relevée par rapport à une zone d'obturation du couvercle intermédiaire de sécurité, ladite cale devant reposer sur le récipient de travail pour être susceptible d'amener l'organe de détection en position relevée. Ainsi la cale montée flottante est susceptible de se déplacer entre une position abaissée, dans laquelle l'organe de détection reste dans une position abaissée et ne peut autoriser la mise en marche de l'appareil; et une position relevée, dans laquelle la cale peut amener l'organe de détection dans une position relevée autorisant la mise en marche de l'appareil, lorsque la cale est supportée par le récipient de travail. En d'autres termes, la cale est mobile dans la direction définie par le déplacement de l'organe de détection entre la position abaissée et la position relevée. La présence du récipient de travail est nécessaire pour supporter la cale mise en place contre le boîtier supérieur et permettre l'actionnement de l'organe de détection autorisant le fonctionnement de l'appareil.

Avantageusement encore, la cale peut coopérer avec l'organe de détection en l'absence du récipient de travail, sans pour autant amener l'organe de détection en position relevée, grâce au moyen de rappel associé à l'organe de détection.

Si désiré le couvercle intermédiaire de sécurité peut comporter une butée supérieure intermédiaire prévue pour coopérer avec la butée inférieure du boîtier supérieur.

Avantageusement encore, la cale comporte une zone d'appui supérieure prévue pour coopérer avec l'orgahe de détection et une zone d'appui inférieure prévue pour coopérer avec une zone de support du récipient de travail.

Selon une forme de réalisation avantageuse, la hauteur de la cale est supérieure à la distance séparant la zone de support d'une position de l'organe de détection dans laquelle l'interrupteur autorise le fonctionnement de l'appareil, lorsque le boîtier supérieur repose sur le récipient de travail en l'absence du couvercle intermédiaire de sécurité. Cette disposition permet d'éviter l'actionnement de l'organe de détection par le récipient de travail en l'absence du couvercle intermédiaire de sécurité.

Avantageusement encore la butée inférieure est prévue pour coopérer avec une butée supérieure du récipient de travail en l'absence du couvercle intermédiaire de sécurité, la hauteur de la zone de support par rapport à la butée supérieure étant inférieure à la hauteur de la position abaissée de l'organe de détection par rapport à la butée inférieure, la hauteur de la zone d'appui supérieure par rapport à la butée supérieure intermédiaire du couvercle intermédiaire de sécurité ou à la butée supérieure du récipient de travail étant supérieure à la hauteur de la position abaissée de l'organe de détection par rapport à la butée inférieure.

Selon une forme de réalisation avantageuse, la zone d'appui supérieure peut être annulaire. Le couvercle intermédiaire de sécurité peut aussi comporter une ou plusieurs zones d'appui non annulaires.

Selon une forme de réalisation avantageuse, la zone de support est ménagée sur un ergot du récipient de travail. Cette disposition permet d'indiquer à l'utilisateur le positionnement du couvercle intermédiaire de sécurité sur le récipient de travail.

Avantageusement alors pour une meilleure compacité, l'ergot est formé par une languette agencée transversalement sur un bord supérieur du récipient de travail.

Avantageusement alors le récipient de travail comporte une zone annulaire en périphérie de l'ergot. Cette disposition permet de réaliser une butée inférieure susceptible de coopérer avec le boîtier supérieur ou avec le couvercle intermédiaire de sécurité.

Selon une forme de réalisation avantageuse, le couvercle intermédiaire de sécurité présente une partie déformable, la cale étant reliée à la partie déformable. Le couvercle intermédiaire peut ainsi être réalisé en une seule , pièce, notamment par surmoulage ou co-moulage. Cette disposition permet également d'obtenir une meilleure étanchéité entre le récipient de travail et le couvercle intermédiaire de sécurité. Plus particulièrement, la cale peut être agencée en périphérie de la partie déformable, ou à une extrémité de la partie déformable. En alternative, la cale peut notamment être montée coulissante ou pivotante par rapport à une autre partie du couvercle intermédiaire de sécurité prévue pour reposer sur le récipient de travail. Cette partie du couvercle intermédiaire de sécurité peut former une zone d'obturation prévue pour fermer au moins partiellement le récipient de travail.

Avantageusement alors, la raideur du moyen de rappel est supérieure à la raideur de la partie déformable. Cette disposition permet d'éviter l'actionnement de l'organe de détection lors de la mise en place du boîtier sur le couvercle intermédiaire de sécurité.

Avantageusement encore, le couvercle intermédiaire de sécurité présente une zone d'obturation, prévue pour fermer au moins partiellement le récipient de travail, la partie déformable étant agencée entre la cale et la zone d'obturation. Cette disposition permet de protéger la partie inférieure du boîtier supérieur.

Avantageusement encore la partie déformable comporte une paroi latérale interne et une paroi latérale externe prévues pour coiffer un ergot du récipient de travail, sur lequel est ménagée une zone de support prévue pour coopérer avec une zone d'appui inférieure de la cale. Cette disposition permet d'assurer une bonne étanchéité entre le récipient et le couvercle intermédiaire de sécurité. Le couvercle intermédiaire de sécurité peut venir en appui annulaire sur le récipient de travail à l'extérieur de l'ergot. Cette disposition permet aussi de limiter la taille de la partie déformable.

Selon une forme de réalisation avantageuse le couvercle intermédiaire de sécurité présente une collerette extérieure agencée en périphérie de la partie déformable. Cette disposition permet de réaliser une butée intermédiaire supérieure susceptible de coopérer avec le boîtier supérieur et/ou une butée intermédiaire inférieure susceptible de coopérer avec le récipient de travail.

Selon une forme de réalisation avantageuse, là partie déformable est réalisée en matériau élastomère. Le couvercle intermédiaire de sécurité peut consister en une pièce en matière plastique surmoulée sur la partie déformable.

Selon une autre forme de réalisation avantageuse, la partie déformable peut être annulaire.

Selon une autre forme de réalisation avantageuse, le couvercle intermédiaire de sécurité peut comporter plusieurs parties déformables.

Selon une forme de réalisation avantageuse le couvercle intermédiaire de sécurité est réalisé en matériau élastomère.

Selon une forme de réalisation avantageuse, le couvercle intermédiaire de sécurité comprend un joint comportant une lèvre déformable reposant sur un décrochement de la face interne d'une paroi latérale du récipient de travail, l'organe de détection étant susceptible d'être déplacé par la cale vers la position relevée lorsqu'une pression déformant la lèvre est exercée sur le boîtier supérieur. Ainsi le joint porte le boîtier supérieur. Cette disposition permet d'offrir plus de liberté pour réaliser le dispositif de sécurité comportant l'interrupteur actionné par l'organe de détection. En effet, selon cette disposition, l'organe de détection commande le fonctionnement de l'appareil mais n'assure plus le support du boîtier supérieur.

Selon une disposition avantageuse, la lèvre est annulaire. La déformation du joint est ainsi mieux maîtrisée. Cette disposition améliore le support du boîtier supérieur. De plus une étanchéité peut être obtenue entre la paroi latérale du récipient de travail et le couvercle intermédiaire de sécurité.

Selon une disposition avantageuse, la lèvre s'étend vers l'extérieur. Cette disposition permet de limiter la largeur du décrochement.

Selon une autre disposition avantageuse, la lèvre est inclinée vers le bas lorsque le boîtier supérieur repose sur le couvercle intermédiaire de sécurité. Cette disposition permet d'obtenir une course plus importante pour la partie supérieure, ce qui contribue à simplifier la commande de l'interrupteur.

Avantageusement alors, la lèvre est incurvée vers le haut lorsqu'une pression est exercée sur le boîtier supérieur. Cette disposition permet également d'obtenir une course plus importante.

Selon une autre disposition avantageuse, la dureté du joint est comprise entre 40 et 50 shore. L'effort à exercer sur la partie supérieure pour faire fonctionner l'appareil est ainsi supérieur à la force de rappel rencontrée usuellement sur les interrupteurs.

Selon une autre disposition avantageuse le joint comporte la partie déformable.

Le joint peut ainsi être surmoulé sur le corps du couvercle intermédiaire de sécurité. En alternative, la cale peut notamment être montée coulissante ou pivotante par rapport au corps du couvercle intermédiaire de sécurité portant le joint prévu pour reposer sur le récipient de travail.

Avantageusement encore, l'outil de travail rotatif comporte une collerette s'étendant au dessous d'une ouverture du couvercle intermédiaire de sécurité, l'ouverture étant prévue pour le passage de l'extrémité supérieure de l'outil de travail rotatif. Cette disposition permet de protéger le boîtier moteur lors de la réalisation de préparations liquides.

L'invention sera mieux comprise à l'étude de cinq exemples de réalisation et d'une variante, pris à titre nullement limitatif, illustrés dans les figures annexées, dans lesquelles:
- la figure 1 est une vue en coupe verticale en éclaté d'un exemple de réalisation d'un appareil électroménager de préparation culinaire selon l'invention,
- la figure 2 est une vue agrandie d'une partie de la figure 1,
- la figure 3 est une vue en perspective du couvercle intermédiaire de sécurité de l'appareil illustré à la figure 1,
- la figure 4 est une vue en perspective du récipient de travail de l'appareil illustré à la figure 1,
- la figure 5 est une vue partielle en coupe verticale de l'appareil illustré à la figure 1, le boîtier supérieur étant simplement posé sur le récipient de travail portant le couvercle intermédiaire de sécurité,
- la figure 6 est une vue agrandie d'une partie de la figure 5,
- la figure 7 est une vue partielle en coupe verticale de l'appareil illustré à la figure 5, dans laquelle une pression est exercée sur le boîtier supérieur en vue de faire fonctionner l'appareil,
- la figure 8 est une vue agrandie d'une partie de la figure 7,
- la figure 9 est une vue partielle en coupe verticale de l'appareil illustré à la figure 1 sans le couvercle intermédiaire de sécurité, une pression exercée sur le boîtier supérieur ne permettant pas le fonctionnement de l'appareil,
- la figure 10 est une vue agrandie d'une partie de la figure 9,
- la figure 11 est une vue partielle en coupe verticale du couvercle intermédiaire de sécurité et du récipient de travail d'un deuxième exemple de réalisation,
- la figure 12 est une vue partielle en coupe verticale du couvercle intermédiaire de sécurité et du récipient de travail d'un troisième exemple de réalisation,
- la figure 13 est une vue partielle en coupe verticale du couvercle intermédiaire de sécurité et du récipient de travail d'un quatrième exemple de réalisation,
- la figure 14 illustre une variante de réalisation d'appui entre le couvercle intermédiaire de sécurité et le récipient de travail,
- la figure 15 est une vue partielle d'un cinquième, exemple de réalisation d'un appareil électroménager de préparation culinaire selon l'invention en coupe verticale, dans une position de repos,
- la figure 16 est une vue partielle agrandie de la figure 15,
- la figure 17 est une vue partielle en coupe verticale de l'appareil illustré aux figures 15 et 16, dans une position de fonctionnement.

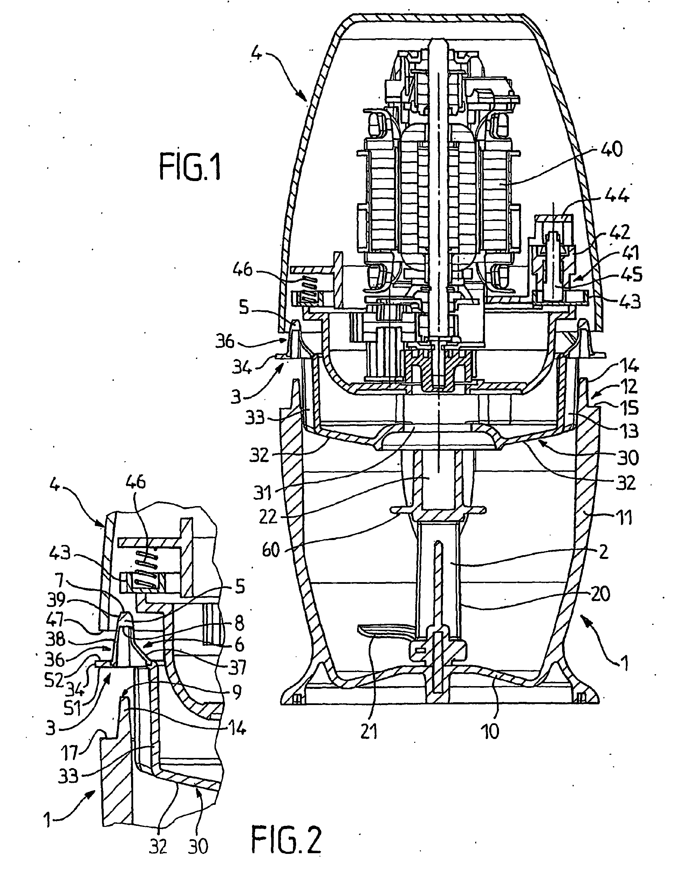

La figure 1 montre un appareil électroménager de préparation culinaire selon l'invention, comprenant un récipient de travail 1, un outil de travail rotatif 2 disposé dans le récipient de travail 1, un couvercle intermédiaire de sécurité 3 disposé sur le récipient de travail 1, et un boîtier supérieur 4 prévu pour être disposé sur le récipient de travail 1 portant le couvercle intermédiaire de sécurité 3.

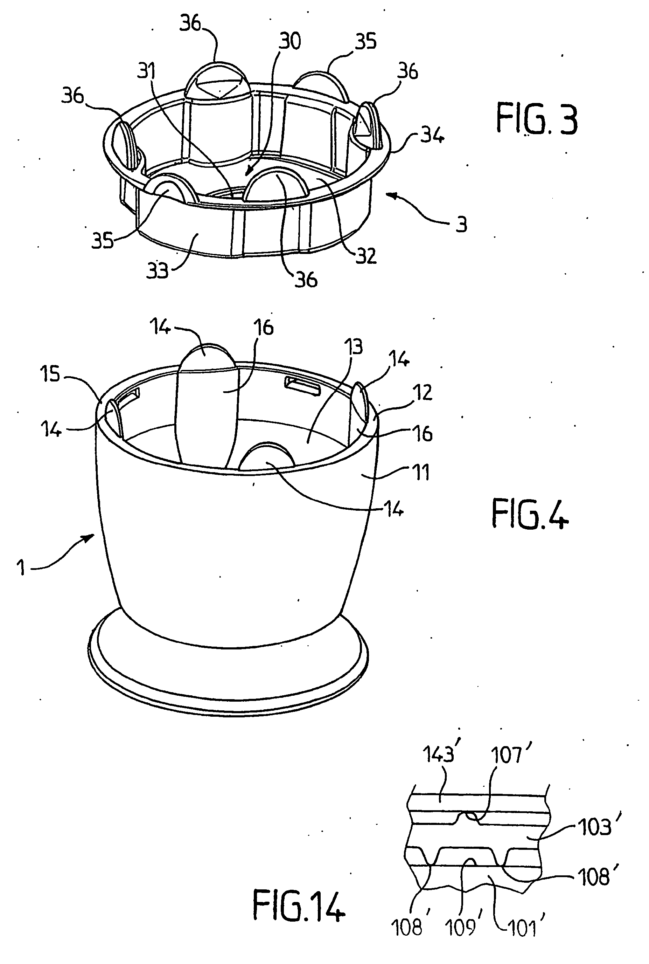

Tel que visible sur les figures 1, 2 et 4, le récipient de travail 1 comporte un fond 10, une paroi latérale 11, un bord supérieur 12 et une ouverture supérieure 13. Des ergots 14 sont agencés sur le bord supérieur 12. Tel que mieux visible sur la figure 4, les ergots 14 sont formés par des languettes agencées transversalement sur le bord supérieur 12. Le bord supérieur 12 définit une zone annulaire 15 en périphérie des ergots 14. Les languettes formant les ergots 14 sont agencées en bordure intérieure du bord supérieur 12. Les languettes formant les ergots 14 sont prolongées à l'intérieur du récipient de travail 1 par une surépaisseur 16. La zone annulaire 15 forme une butée supérieure 17 prévue pour coopérer avec une butée inférieure 47 du boîtier 4 supérieur en l'absence du couvercle intermédiaire de sécurité 3.

Tel que visible sur la figure 1, l'outil de travail rotatif 2 comporte un moyeu 20 portant un couteau 21. Le moyeu 20 présente une tête d'entraînement 22.

Tel que visible sur les figures 1 et 3, le couvercle intermédiaire de sécurité 3 comporte une zone d'obturation 30 prévue pour fermer au moins partiellement le récipient de travail 1. La zone d'obturation 30 présente une ouverture 31 prévue pour le passage de la tête d'entraînement 22. A titre de variante, une pièce de transmission pourrait être montée en rotation dans l'ouverture 31, la tête d'entraînement 22 étant alors entraînée par ladite pièce de transmission. La zone d'obturation 30 présente un fond 32 surmonté d'une paroi latérale 33. Une collerette extérieure 34 prolonge la partie supérieure de la paroi latérale 33. La face inférieure de la collerette extérieure 34 est prévue pour prendre appui sur la zone annulaire 15 du bord supérieur 12. La collerette extérieure 34 présente deux montants 35 prévus pour faciliter la préhension du couvercle intermédiaire de sécurité 3.

Le couvercle intermédiaire de sécurité 3 comporte en outre des conformations 36 prévues pour coiffer les ergots 14 lorsque le couvercle intermédiaire de sécurité 3 est en place sur le récipient de travail 1. Tel que mieux visible à la figure 2, les conformations 36 présentent une paroi latérale interne 37 et une paroi latérale externe 38 reliées par une paroi supérieure 39. Selon une forme de réalisation préférée, les conformations 36 sont réalisées en élastomère, le fond 32, la paroi latérale 33, la collerette extérieure 34 et les montants 35 étant réalisés par surmoulage d'une matière plastique plus rigide. L'épaisseur de la paroi latérale interne 37 et l'épaisseur de la paroi latérale externe 38 sont beaucoup plus réduites que l'épaisseur de la paroi supérieure 39. La paroi latérale interne 37 et la paroi latérale externe 38 sont prévues pour coiffer l'ergot 14 et forment des parties déformables 6.

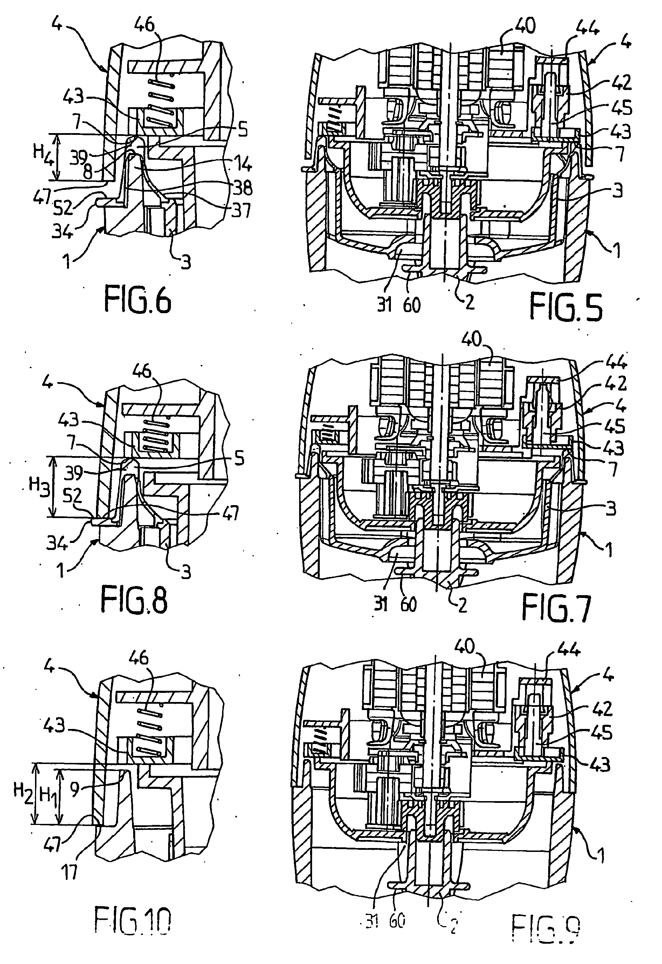

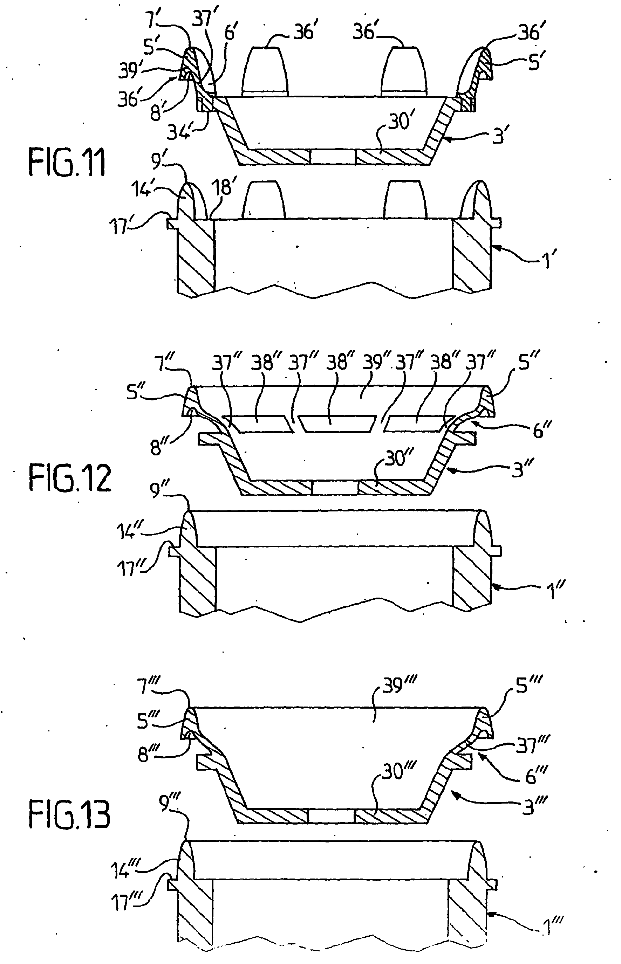

Tel que visible sur la figure 1, le boîtier supérieur 4 loge un moteur 40 prévu pour entraîner en rotation l'outil de travail rotatif 2 disposé dans le récipient de travail 1. Le moteur 40 est associé à des moyens de commande 41 logés dans le boîtier supérieur 4. Les moyens de commande 41 comportant un interrupteur 42 susceptible d'être actionné par un organe de détection 43. Plus particulièrement, l'interrupteur 42 comporte un boîtier 44 et un bouton de commande 45 coopérant avec l'organe de détection 43. Un moyen de rappel élastique 46 est prévu pour repousser l'organe de détection 43. L'organe de détection 43 est monté mobile dans le boîtier supérieur 4 entre une position abaissée, représentée aux figures 1, 2, 5, 6, 9 et 10, et une position relevée, représentée aux figures 7 et 8. Plus particulièrement, l'organe de détection 43 est formé par une couronne.

La face supérieure de la paroi supérieure 39 de chaque conformation 36 forme une zone d'appui supérieure 7 prévue pour coopérer avec l'organe de détection 43. La face inférieure de la paroi supérieure 39 de chaque conformation 36 forme une zone d'appui inférieure 8 prévue pour coopérer avec une zone de support 9 du récipient de travail 3. Plus particulièrement, les zones de support 9 sont formées par le sommet des ergots 14.

Les parties déformables 6 du couvercle intermédiaire de sécurité 3 sont agencées entre les zones d'appui supérieures 7 et la zone d'obturation 30. Les parties déformables 6 du couvercle intermédiaire de sécurité 3 sont agencées entre les zones d'appui inférieures 8 et la zone d'obturation 30.

Ainsi le couvercle intermédiaire de sécurité 3 comporte une série de cales 5 montées flottantes. Chaque cale 5 comporte une des zones d'appui supérieures 7 prévues pour actionner l'organe de détection 43. Chaque cale 5 comporte une des zones d'appui inférieures 8 prévues pour reposer sur le récipient de travail 1. Tel que bien visible aux figures 1 à 3 et 5 à 8, chaque cale est reliée à l'une des parties déformables 6. Les parties déformables 6 sont reliées à la zone d'obturation 30.

Le couvercle intermédiaire de sécurité 3 présente une butée inférieure intermédiaire 51 prévue pour coopérer avec la butée supérieure 17 du récipient de travail 1. Le couvercle intermédiaire de sécurité 3 présente une butée supérieure intermédiaire 52 prévue pour coopérer avec la butée inférieure 47 du boîtier supérieur 4. Plus particulièrement, la butée inférieure intermédiaire 51 et la butée supérieure intermédiaire 52 sont ménagées sur la collerette extérieure 34.

Les figures 5 et 6 représentent le boîtier supérieur 4 simplement posé sur le récipient de travail 1 surmonté du couvercle intermédiaire de sécurité 3. La cale 5 est interposée entre le récipient de travail 1 et le boîtier moteur 4. L'organe de détection 43 repose sur les zones d'appui supérieures 7 du couvercle intermédiaire de sécurité 3. Le moyen de rappel élastique 46 permet de supporter le poids du boîtier moteur 1. L'organe de détection 43 occupe la position abaissée. L'interrupteur 42 n'est pas actionné et le moteur 40 ne peut fonctionner.

Les figures 7 et 8 représentent le boîtier supérieur 4 posé sur le récipient de travail 1 surmonté du couvercle intermédiaire de sécurité 3, une pression étant exercée sur le boîtier moteur 4 pour déplacer l'organe de détection 43 contre le moyen de rappel élastique 46. La cale 5 est interposée entre le récipient de travail 1 et le boîtier moteur 4. L'organe de détection 43 occupe la position relevée. L'organe de détection 43 repousse le bouton de commande 45 vers le boîtier 44. L'interrupteur 42 est actionné et le moteur 40 peut fonctionner.

Les figures 9 et 10 représentent le boîtier supérieur 4 simplement posé sur le récipient de travail 1 en l'absence du couvercle intermédiaire de sécurité 3. Le récipient de travail 1 ne peut atteindre l'organe de détection 43.

La hauteur H1 de la zone de support 9 par rapport à la butée supérieure 17 est inférieure à la hauteur H2 de la position abaissée de l'organe de détection 43 par rapport à la butée inférieure 47.

La hauteur H3 de la zone d'appui supérieure 7 par rapport à la butée supérieure intermédiaire 52 du couvercle intermédiaire de sécurité 3, visible sur la figure 6. est supérieure à la hauteur H4 de la position abaissée de l'organe de détection 43 par rapport à la butée inférieure 47, visible sur la figure 6.

Ainsi la hauteur de la cale 5 est supérieure à la distance séparant la zone de support 9 de la position abaissée de l'organe de détection 43 lorsque le boîtier supérieur 4 repose sur le récipient de travail 1 en l'absence du couvercle intermédiaire de sécurité 3, tel qu'illustré aux figures 5 à 10.

Plus particulièrement, la hauteur de la cale 5 est supérieure à la distance séparant la zone de support 9 d'une position de l'organe de détection 43 dans laquelle l'interrupteur 42 autorise le fonctionnement de l'appareil, lorsque le boîtier supérieur 4 repose sur le récipient de travail 1 en l'absence du couvercle intermédiaire de sécurité 3.

Tel que bien visible sur les figures 1, 5, 7 et 9, l'outil de travail rotatif 2 comporte une collerette 60 s'étendant au dessous de l'ouverture 31 du couvercle intermédiaire de sécurité 3. L'ouverture 31 est prévue pour le passage de l'extrémité supérieure de l'outil de travail rotatif 2.

L'appareil selon l'invention fonctionne de la manière suivante.

Lorsque le boîtier supérieur 4 est en place sur le récipient de travail 1 surmonté du couvercle intermédiaire de sécurité 3, tel qu'illustré aux figures 5 et 6, l'organe de détection 43 repose sur la zone d'appui supérieure 7. Toutefois l'effort du moyen de rappel 46 permet de supporter le poids du boîtier supérieur 4, l'organe de détection 43 restant dans une position abaissée dans laquelle le moteur 40 ne peut fonctionner.

Lorsque l'utilisateur exerce une pression sur le boîtier supérieur 4, tel qu'illustré aux figures 7 et 8, l'organe de détection 43 reposant sur la zone d'appui supérieure 7 est déplacé contre le moyen de rappel 46. L'organe de détection 43 atteint la position relevée dans laquelle le moteur 40 peut fonctionner.

Si l'utilisateur met en place le boîtier supérieur 4 sur le récipient de travail 1 en l'absence du couvercle intermédiaire de sécurité 3, tel qu'illustré aux figures 9 et 10, la butée inférieure 47 du boîtier supérieur 4 vient contre la butée supérieure 17 du récipient de travail 1. La hauteur de la zone de support 9 par rapport à la butée supérieure 17 est insuffisante pour permettre l'actionnement de l'organe de détection 43. L'appareil ne peut fonctionner.

Si l'utilisateur met en place le couvercle intermédiaire de sécurité 3 contre le boîtier supérieur 4 en l'absence du récipient de travail 1, la zone d'appui supérieure 7 vient en contact avec l'organe de détection 43. L'utilisateur maintient le couvercle intermédiaire de sécurité 3 par la zone d'obturation 30. La pression exercée sur la zone d'obturation 30 contribue à déformer les parties déformables 6. Grâce à la raideur des moyens de rappel 46 et à la souplesse des parties déformables 6, l'organe de détection 43 reste en position abaissée. L'appareil ne peut fonctionner.

Ainsi les cales 5 doivent être supportées par le récipient de travail 1 pour être susceptibles d'amener l'organe de détection 43 en position relevée et permettre le fonctionnement de l'appareil.

La figure 11 montre un deuxième exemple de réalisation différant de l'exemple de réalisation précédent en ce que les conformations 36' du couvercle intermédiaire de sécurité 3' présentent une paroi supérieure 39' reliée à la zone d'obturation 30' par une paroi latérale interne 37'. Le boîtier supérieur de ce deuxième exemple de réalisation est identique au boîtier supérieur 4 du premier exemple de réalisation.

Les conformations 36' sont prévues pour coopérer avec les ergots 14' du récipient de travail 1'. La face supérieure de la paroi supérieure 39' de chaque conformation 36' forme une zone d'appui supérieure 7' prévue pour coopérer avec l'organe de détection 43. La face inférieure de la paroi supérieure 39' de chaque conformation 36' forme une zone d'appui inférieure 8' prévue pour coopérer avec une zone de support 9' ménagée sur les ergots 14'. Le couvercle intermédiaire de sécurité 3' comporte une collerette 34' agencée en périphérie de la zone d'obturation 30'. La collerette 34' est prévue pour prendre appui sur un rebord annulaire intérieur 18' du récipient de travail 1'. Les ergots 14' sont agencés en périphérie du rebord annulaire intérieur 18'. La paroi latérale interne 37' forme une partie déformable 6' agencée entre la zone d'appui inférieure 8' et la zone d'obturation 30' du couvercle intermédiaire de sécurité 3'. Chaque conformation 36' forme une cale 5' montée flottante.

Le couvercle intermédiaire de sécurité 3' peut être obtenu par surmoulage, les conformations 36' étant réalisées en élastomère.

La figure 12 montre un troisième exemple de réalisation différant des exemples de réalisation précédents en ce que le couvercle intermédiaire de sécurité 3" présente une paroi supérieure 39" annulaire reliée à la zone d'obturation 30" par des parois latérales internes 37" séparées par des espaces 38". Le boîtier supérieur de ce troisième exemple de réalisation est identique au boîtier supérieur 4 du premier exemple de réalisation.

La face supérieure de la paroi supérieure 39" forme une zone d'appui supérieure 7" prévue pour coopérer avec l'organe de détection 43. La face inférieure de la paroi supérieure 39" forme une zone d'appui inférieure 8" prévue pour coopérer avec une zone de support 9" ménagée sur une nervure annulaire périphérique 14" du récipient de travail 1 ". Le couvercle intermédiaire de sécurité 3" est dépourvu de collerette extérieure. Les parois latérales internes 37" forment une partie déformable 6" agencée entre la zone d'appui inférieure 8" et la zone d'obturation 30" du couvercle intermédiaire de sécurité 3". La paroi supérieure 39" forme une cale 5" montée flottante.

Le couvercle intermédiaire de sécurité 3" peut notamment être réalisé en une matière plastique tel que le polypropylène, l'épaisseur des parois latérales internes 37" étant réalisée suffisamment fine pour obtenir la souplesse nécessaire au déplacement de la paroi supérieure 39" par rapport à la zone d'obturation 30".

La figure 13 montre un quatrième exemple de réalisation différant de l'exemple de réalisation précédent en ce que la paroi supérieure 39"' annulaire est reliée à la zone d'obturation 30"' par une paroi latérale interne 37"' annulaire. Le boîtier supérieur de ce troisième exemple de réalisation est identique au boîtier supérieur 4 du premier exemple de réalisation.

La face supérieure de la paroi supérieure 39'" forme une zone d'appui supérieure 7"' prévue pour coopérer avec l'organe de détection 43. La face inférieure de la paroi supérieure 39"' forme une zone d'appui inférieure 8"' prévue pour coopérer avec une zone de support 9"' ménagée sur une nervure annulaire périphérique 14"' du récipient de travail 1"".- Le couvercle intermédiaire de sécurité 3'" est dépourvu de collerette extérieure. La paroi latérale interne 37"" forme une partie déformable 6"' agencée entre la zone d'appui inférieure 8"' et la zone d'obturation 30"' du couvercle intermédiaire de sécurité 3"'. La paroi supérieure 39'" forme une cale 5"' montée flottante.

Le couvercle intermédiaire de sécurité 3"' peut notamment être réalisé en élastomère, l'épaisseur de la paroi latérale interne 37'" étant réalisée suffisamment fine pour obtenir la souplesse nécessaire au déplacement de la paroi supérieure 39"' par rapport à la zone d'obturation 30"'.

Dans les deuxième, troisième et quatrième exemples de réalisation, la ou les cales 5', 5", 5"' doivent être supportées par le récipient de travail 1',1", 1"' pour être susceptibles d'amener l'organe de détection 43 en position relevée et permettre le fonctionnement de l'appareil.

Plus particulièrement, la hauteur de la ou des cales 5', 5", 5"' est supérieure à la distance séparant la zone de support 9', 9", 9"' de la position abaissée de l'organe de détection 43 lorsque le boîtier supérieur 4 repose sur le récipient de travail 1', 1", ,1"' en l'absence du couvercle intermédiaire de sécurité 3', 3", 3'". La butée inférieure 47 du boîtier supérieur 4 est prévue pour coopérer avec une butée supérieure 17" ; 17"; 17"' du récipient de travail 1'; 1" ; 1 "' en l'absence du couvercle intermédiaire de sécurité 3' ; 3" ; 3"'. La hauteur de la zone de support 9', 9", 9"' par rapport à la butée supérieure 17', 17", 17'" est inférieure à la hauteur de la position abaissée de l'organe de détection 43 par rapport à la butée inférieure 47 du boîtier supérieur 4. La hauteur de la zone d'appui supérieure 7', 7", 7"' du couvercle intermédiaire de sécurité 3', 3", 3"' par rapport à la butée supérieure 17', 17", 17"' du récipient de travail 1', 1", 1'" est supérieure à la hauteur de la position abaissée de l'organe de détection 43 par rapport à la butée inférieure 47 du boîtier supérieur 4.

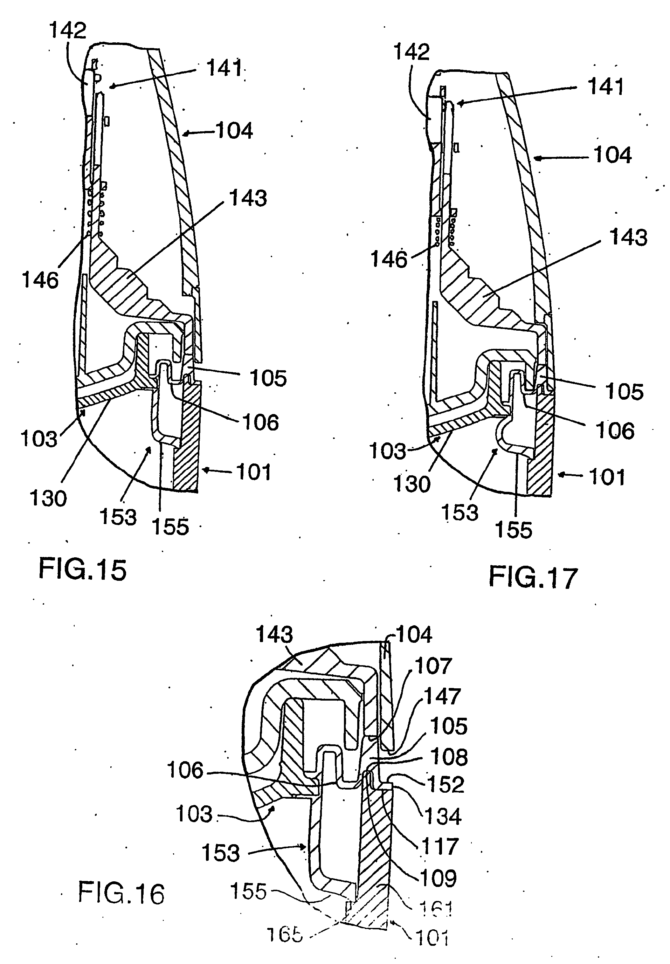

Un cinquième exemple de réalisation est illustré aux figures 15 à 17. L'appareil comporte un récipient de travail 101, un couvercle intermédiaire de sécurité 103, un boîtier supérieur 104 logeant un moteur prévu pour entraîner en rotation un outil de travail rotatif disposé dans le récipient de travail 101. Le moteur est associé à des moyens de commande 141 logés dans le boîtier supérieur 104. Les moyens de commande 141 comportent un interrupteur 142 susceptible d'être actionné par un organe de détection 143 monté mobile contre un moyen de rappel 146 entre une position abaissée représentée aux figures 15 et 16 et une position relevée représentée à la figure 17.

Le couvercle intermédiaire de sécurité 103 présente une zone d'obturation 130 prévue pour fermer au moins partiellement le récipient de travail 101. Le couvercle intermédiaire de sécurité 103 comporte une butée supérieure intermédiaire 152 prévue pour coopérer avec une butée inférieure. 147 du boîtier supérieur 104.

Le couvercle intermédiaire de sécurité 103 présente une partie déformable 106 et une cale 105 agencée en périphérie de la partie déformable 106. La partie déformable 106 est agencée entre la cale 105 et la zone d'obturation 130. La cale 105 est reliée à la partie déformable 106. La partie déformable 106 est reliée à la zone d'obturation 130. La partie déformable 106 est réalisée en élastomère. La partie déformable 106 est annulaire. Le couvercle intermédiaire de sécurité 103 présente une collerette extérieure 134 agencée en périphérie de la partie déformable 106.

La cale 105 est montée flottante. La cale 105 comporte une zone d'appui supérieure 107 prévue pour coopérer avec l'organe de détection 143 et une zone d'appui inférieure 108 prévue pour coopérer avec une zone de support 109 du récipient de travail 101. La hauteur de la cale 105 est supérieure à la distance séparant la zone de support 109 d'une position de l'organe de détection 143 dans laquelle l'interrupteur 142 autorise le fonctionnement de l'appareil lorsque le boîtier supérieur 104 repose sur le récipient de travail 101 en l'absence du couvercle intermédiaire de sécurité 103. La cale 105 est avantageusement annulaire. La zone d'appui supérieure 107 est avantageusement annulaire.

Le couvercle intermédiaire de sécurité 103 comporte en outre un joint 153 comportant une lèvre 155 déformable reposant sur un décrochement 165 de la face interne d'une paroi latérale 161 du récipient de travail 101. La dureté du joint 153 est de préférence comprise entre 40 et 50 shore. Le joint 153 comporte la partie déformable 106. La lèvre 155 s'étend vers l'extérieur. La lèvre 155 est avantageusement annulaire.

L'organe de détection 143 occupe la position abaissée illustrée aux figures 15 et 16 lorsque le boîtier supérieur 104 repose sur le couvercle intermédiaire de sécurité 103 reposant sur le récipient de travail 101. L'organe de détection 143 est susceptible d'être déplacé par la cale 105 lorsqu'une pression déformant la lèvre 155 est exercée sur le boîtier supérieur 104.

L'appareil illustré aux figures 15 à 17 fonctionne de la manière suivante.

L'utilisateur pose le couvercle intermédiaire de sécurité 103 sur le récipient de travail 101, puis le boîtier supérieur 104 sur le couvercle intermédiaire de sécurité 103. La lèvre 155 est inclinée vers le bas lorsque le boîtier supérieur 104 repose sur le couvercle intermédiaire de sécurité 103. Pour faire fonctionner l'appareil, l'utilisateur exerce une pression sur le boîtier supérieur 104. La lèvre 155 se déforme et est incurvée vers le haut lorsqu'une pression est exercée sur le boîtier supérieur 104. L'organe de détection 143 est alors repoussé par la cale 105. L'interrupteur 142 est actionné et l'appareil peut fonctionner.

En l'absence du récipient de travail 101, la cale 105 peut coopérer avec l'organe de détection 143, sans entraîner le fonctionnement de l'appareil, du fait de la souplesse de la partie déformable 106.

En l'absence du couvercle intermédiaire de sécurité 103, la butée inférieure 47 du boîtier supérieur 104 est prévue pour coopérer avec une butée supérieure 117 du récipient de travail 101, sans entraîner le fonctionnement de l'appareil, du fait que la zone de support 109 du récipient de travail 101 ne peut repousser l'organe de détection 143 dans une position actionnant l'interrupteur 142. L'appareil ne peut fonctionner.

A titre de variante, tel qu'illustré à la figure 14, la zone d'appui supérieure 107' du couvercle intermédiaire de sécurité 103', prévue pour coopérer avec l'organe de détection 143', n'est pas nécessairement agencée au dessus d'une zone d'appui inférieure 108' du couvercle intermédiaire de sécurité 103', prévue pour coopérer avec une zone de support 109' du récipient de travail 101'.

A titre de variante, le couvercle intermédiaire de sécurité peut comporter une ou plusieurs cales 5, 5', 5", 5'" montées flottantes.

A titre de variante, l'organe de détection n'est pas nécessairement monté mobile en translation verticale dans le boîtier supérieur. L'organe de détection peut par exemple être monté pivotant ou basculant. L'organe de détection n'est pas nécessairement une couronne.

A titre de variante, le couvercle intermédiaire de sécurité peut comporter une seule partie déformable.

A titre de variante, un récipient de travail comportant des ergots 14' pourrait être associé à un couvercle intermédiaire de sécurité comportant une zone d'appui supérieure 7" ; 7"' annulaire.

A titre de variante, un récipient de travail comportant une nervure annulaire périphérique 14" ; 14"' pourrait être associé à un couvercle intermédiaire de sécurité comportant une zone d'appui supérieure 7' non annulaire.

A titre de variante, l'organe de détection 43; 143 n'actionne pas nécessairement l'interrupteur 42 ; 142 de manière directe.

A titre de variante, la cale 5 ; 5' ; 5" ; 5"' peut notamment être montée coulissante ou pivotante entre une position relevée et une position abaissée, par rapport à une autre partie du couvercle intermédiaire de sécurité 3 ; 3'; 3" ; 3"' prévue pour reposer sur le récipient de travail 1 ; 1'; 1"; 1"', telle que par exemple la zone d'obturation 30; 30'; 30" ; 30"'.

A titre de variante, la zone d'appui inférieure 108 de la cale 105 ne repose pas nécessairement sur la zone de support 109 du récipient de travail 101 lorsque le boîtier supérieur 104 repose sur le couvercle intermédiaire de sécurité 103 agencé sur le récipient de travail 101.

A titre de variante, le couvercle intermédiaire de sécurité 103 peut comporter des ergots 14 ; le couvercle intermédiaire de sécurité 3 ; 3' ; 3" ; 3"' peut comprendre un joint comportant une lèvre 155.

A titre de variante, la partie déformable 106 peut être indépendante du joint 153 comportant la lèvre 155.

A titre de variante, la lèvre 155 n'est pas nécessairement annulaire. De préférence alors, la partie déformable est annulaire.

A titre de variante, la partie déformable 106 n'est pas nécessairement annulaire. De préférence alors, la lèvre 155 est annulaire.

A titre de variante, la cale 105 pourrait être montée coulissante ou pivotante entre une position relevée et une position abaissée par rapport au corps 130 du couvercle intermédiaire de sécurité 103 portant le joint 153 prévu pour reposer sur le récipient de travail 101.

La présente invention n'est nullement limitée aux exemples de réalisation et aux variantes de réalisation décrits, mais englobe de nombreuses modifications dans le cadre des revendications.

## Revendications

1. Appareil électroménager de préparation culinaire comprenant un récipient de travail (1 ; 1' ; 1" ; 1"'; 101), un couvercle intermédiaire de sécurité (3 ; 3' ; 3" ; 3"' ; 103), un boîtier supérieur (4; 104) logeant un moteur (40) prévu pour entraîner en rotation un outil de travail rotatif (2) disposé dans le récipient de travail (1 ; 1' ; 1" ; 1"' ; 101), le moteur (40) étant associé à des moyens de commande (41 ; 141) logés dans le boîtier supérieur (4 ; 104), les moyens de commande (41 ; 141) comportant un interrupteur (42 ; 142) susceptible d'être actionné par un organe de détection (43 ; 143) monté mobile entre une position abaissée et une position relevée contre un moyen de rappel (46 ; 146), le couvercle intermédiaire de sécurité (3 ; 3' ; 3" ; 3"'; 103) comportant une cale (5; 5'; 5"; 5"'; 105) prévue pour actionner l'organe de détection (43 ; 143), **caractérisé en ce que** la cale (5 ; 5' ; 5" ; 5"' ; 105) est montée flottante, la cale (5 ; 5' ; 5" ; 5"' ; 105) étant mobile entre une position abaissée et une position relevée par rapport à une zone d'obturation (30; 30'; 30"; 30"'; 130) du couvercle intermédiaire de sécurité (3; 3'; 3"; 3"'; 103), la cale (5 ; 5' ; 5" : 5"' ; 105) devant reposer sur le récipient de travail (1 ; 1' ; 1" ; 1"' ; 101) pour être susceptible d'amener l'organe de détection (43 ; 143) en position relevée.

2. Appareil électroménager de préparation culinaire selon la revendication 1, **caractérisé en ce que** la cale (5, 5', 5", 5"' ; 105) peut coopérer avec l'organe de détection (43 ; 143) en l'absence du récipient de travail (1 ; 1' ; 1" ; 1"' ; 101).

3. Appareil électroménager de préparation culinaire selon l'une des revendications 1 ou 2, **caractérisé en ce que** le couvercle intermédiaire de sécurité (3 ; 103) comporte une butée supérieure intermédiaire (52 ; 152) prévue pour coopérer avec une butée inférieure (47; 147) du boîtier supérieur (4 ; 104).

4. Appareil électroménager de préparation culinaire selon l'une des revendications 1 à 3, **caractérisé en ce que** la cale (5, 5', 5", 5"' ; 105) comporte une zone d'appui supérieure (7 ; 7' ; 7" ; 7"' ; 107) prévue pour coopérer avec l'organe de détection (43; 143) et une zone d'appui inférieure (8 ; 8' ; 8" ; 8"'; 108) prévue pour coopérer avec une zone de support (9 ; 9' ; 9" ; 9"' ; 109) du récipient de travail (1 ; 1' ; 1"; 1"' ; 101).

5. Appareil électroménager de préparation culinaire selon la revendication 4, **caractérisé en ce que** la hauteur de la cale (5 ; 5' ; 5" ; 5"' ; 105) est supérieure à la distance séparant la zone de support (9 ; 9' ; 9" ; 9"' ; 109) d'une position de l'organe de détection (43 ; 143) dans laquelle l'interrupteur (42 ; 142) autorise le fonctionnement de l'appareil, lorsque le boîtier supérieur (4 ; 104) repose sur le récipient de travail (1; 1'; 1"; 1"'; 101) en l'absence du couvercle intermédiaire de sécurité (3 ; 3'; 3"; 3"'; 103).

6. Appareil électroménager de préparation culinaire selon l'une des revendications 4 ou 5, **caractérisé en ce que** le couvercle intermédiaire de sécurité (3 ; 3' ; 3" ; 3"') comporte une butée supérieure intermédiaire (52) prévue pour coopérer avec une butée inférieure (47) du boîtier supérieur (4), la butée inférieure (47) étant prévue pour coopérer avec une butée supérieure (17 ; 17' ; 17" ; 17"') du récipient de travail (1 ; 1' ; 1" ; 1"') en l'absence du couvercle intermédiaire de sécurité (3 ; 3' ; 3"; 3"'), **en ce que** la hauteur (H1) de la zone de support (9 ; 9'; 9"; 9"') par rapport à la butée supérieure (17; 17'; 17" ; 17"') est inférieure à la hauteur (H2) de la position abaissée de l'organe de détection (43) par rapport à la butée inférieure (47) et **en ce que** la hauteur (H3) de la zone d'appui supérieure (7) par rapport à la butée supérieure intermédiaire (52) ou à la butée supérieure (17 ; 17'; 17" ; 17"') est supérieure à la hauteur (H4) de la position abaissée de l'organe de détection (43) par rapport à la butée inférieure (47).

7. Appareil électroménager de préparation culinaire selon l'une des revendications 4 à 6, **caractérisé en ce que** la zone d'appui supérieure (7"; 7"' ; 107) est annulaire.

8. Appareil électroménager de préparation culinaire selon l'une des revendications 4 à 7, **caractérisé en ce que** la zone de support (9 ; 9') est ménagée sur un ergot (14 ; 14') du récipient de travail (1;1').

9. Appareil électroménager de préparation culinaire selon la revendication 8, **caractérisé en ce que** l'ergot (14) est formé par une languette agencée transversalement sur un bord supérieur (12) du récipient de travail (1).

10. Appareil électroménager de préparation culinaire selon l'une des revendications 8 ou 9, **caractérisé en ce que** le récipient de travail (1) comporte une zone annulaire (15) en périphérie de l'ergot (14).

11. Appareil électroménager de préparation culinaire selon l'une des revendications 1 à 10, **caractérisé en ce que** le couvercle intermédiaire de sécurité (3 ; 3' ; 3" ; 3"' ; 103) présente une partie déformable (6 ; 6' ; 6" ; 6"' ; 106), la cale (5 ; 5'; 5" ; 5"' ; 105) étant reliée à la partie déformable (6; 6'; 6"; 6"'; 106).

12. Appareil électroménager de préparation culinaire selon la revendication 11, **caractérisé en ce que** la raideur du moyen de rappel (46) est supérieure à la raideur de la partie déformable (6 ; 6' ; 6" ; 6"').

13. Appareil électroménager de préparation culinaire selon l'une des revendications 11 ou 12, **caractérisé en ce que** le couvercle intermédiaire de sécurité (3 ; 3' ; 3" ; 3"' ; 103) présente une zone d'obturation (30 ; 30' ; 30" ; 30"' ; 130), prévue pour fermer au moins partiellement le récipient de travail (1 ; 1' ; 1" ; 1"' ; 101), la partie déformable (6 ; 6' ; 6" ; 6"' ; 106) étant agencée entre la cale (5, 5', 5", 5"' ; 105) et la zone d'obturation (30 ; 30' ; 30" ; 30"' ; 130).

14. Appareil électroménager de préparation culinaire selon l'une des revendications 11 à 13, **caractérisé en ce que** la partie déformable (6) comporte une paroi latérale interne (37) et une paroi latérale externe (38) prévues pour coiffer un ergot (14; 14') du récipient de travail (1;1').

15. Appareil électroménager de préparation culinaire selon l'une des revendications 11 à 14, **caractérisé en ce que** le couvercle intermédiaire de sécurité (3; 103) présente une collerette extérieure (34 ; 134) agencée en périphérie de la partie déformable (6 ; 106).

16. Appareil électroménager de préparation culinaire selon l'une des revendications 11 à 15, **caractérisé en ce que** la partie déformable (6 ; 6'; 6"' ; 106) est réalisée en matériau élastomère.

17. Appareil électroménager de préparation culinaire selon l'une des revendications 11 à 16, **caractérisé en ce que** la partie déformable (6"' ; 106) est annulaire.

18. Appareil électroménager de préparation culinaire selon l'une des revendications 11 à 17, **caractérisé en ce que** le couvercle intermédiaire de sécurité (3 ; 3' ; 3") comporte plusieurs parties déformables (6 ; 6' ;6").

19. Appareil électroménager de préparation culinaire selon l'une des revendications 11 à 17, **caractérisé en ce que** le couvercle intermédiaire de sécurité (3"') est réalisé en matériau élastomère.

20. Appareil électroménager de préparation culinaire selon l'une des revendications 1 à 19, **caractérisé en ce que** le couvercle intermédiaire de sécurité (103) comprend un joint (153) comportant une lèvre (155) déformable reposant sur un décrochement (165) de la face interne d'une paroi latérale (161) du récipient de travail (101), l'organe de détection (143) étant susceptible d'être déplacé par la cale (105) vers la position relevée lorsqu'une pression déformant la lèvre (155) est exercée sur le boîtier supérieur (104).

21. Appareil électroménager de préparation culinaire selon la revendication 20, **caractérisé en ce que** la lèvre (155) est annulaire.

22. Appareil électroménager de préparation culinaire selon l'une des revendications 20 ou 21, **caractérisé en ce que** la lèvre (155) s'étend vers l'extérieur.

23. Appareil électroménager de préparation culinaire selon l'une des revendications 20 à 22, **caractérisé en ce que** la lèvre (155) est inclinée vers le bas lorsque le boîtier supérieur (104) repose sur le couvercle intermédiaire de sécurité (103).

24. Appareil électroménager de préparation culinaire selon la revendication 23, **caractérisé en ce que** la lèvre (155) est incurvée vers le haut lorsqu'une pression est exercée sur le boîtier supérieur (104).

25. Appareil électroménager de préparation culinaire selon l'une des revendications 20 à 24, **caractérisé en ce que** la dureté du joint (153) est comprise entre 40 et 50 shore.

26. Appareil électroménager de préparation culinaire selon l'une des revendications 11 à 19 et l'une des revendications 20 à 25, **caractérisé en ce que** le joint (153) comporte la partie déformable (106).

27. Appareil électroménager de préparation culinaire selon l'une des revendications 1 à 26, **caractérisé en ce que** l'outil de travail rotatif (2) comporte une collerette (60) s'étendant au dessous d'une ouverture (31) du couvercle intermédiaire de sécurité (3 ; 3' ; 3" ; 3"' ; 103), l'ouverture (31) étant prévue pour le passage de l'extrémité supérieure de l'outil de travail rotatif (2).

28. Appareil électroménager de préparation culinaire selon l'une des revendications 1 à 27, **caractérisé en ce que** la cale (5, 5', 5", 5"' ; 105) est montée coulissante ou pivotante entre une position relevée et une position abaissée.

## Claims

1. A food-preparation household electrical appliance comprising a work receptacle (1; 1'; 1"; 1"'; 101), an intermediate safety lid (3; 3'; 3"; 3"'; 103), a top housing (4; 104) that houses a motor (40) designed for driving in rotation a rotary work tool (2) disposed in the work receptacle (1; 1'; 1"; 1"'; 101), the motor (40) being associated with control means (41; 141) that are housed in the top housing (4; 104), the control means (41; 141) comprising a switch (42; 142) suitable for being actuated by a detection member (43; 143) mounted to move between a lowered position and a raised position against thrust from return means (46; 146), the intermediate safety lid (3; 3'; 3"; 3"'; 103) being provided with a shim (5; 5'; 5"; 5"'; 105) designed to actuate the detection member (43; 143), said food-preparation household electrical appliance being **characterized in that** the shim (5; 5'; 5"; 5"'; 105) is mounted to be floating, the shim (5; 5'; 5"; 5"'; 105) being mounted to move between a lowered position and a raised position relative to a closure zone (30; 30'; 30"; 30"'; 130) of the intermediate safety lid (3; 3'; 3"; 3"'; 103), it being necessary for the shim (5; 5'; 5"; 5"'; 105) to rest on the work receptacle (1; 1'; 1"; 1"'; 101) so as to be suitable for bringing the detection member (43; 143) into the raised position.

2. A food-preparation household electrical appliance according to claim 1, **characterized in that** the shim (5, 5', 5", 5"'; 105) can co-operate with the detection member (43; 143) when the work receptacle (1; 1'; 1"; 1"'; 101) is not present.

3. A food-preparation household electrical appliance according to claim 1 or claim 2, **characterized in that** the intermediate safety lid (3; 103) has an intermediate top abutment (52; 152) designed to co-operate with a bottom abutment (47; 147) of the top housing (4; 104).

4. A food-preparation household electrical appliance according to any one of claims 1 to 3, **characterized in that** the shim (5, 5', 5", 5"'; 105) has a top bearing zone (7; 7'; 7"; 7"'; 107) designed to co-operate with the detection member (43; 143) and a bottom bearing zone (8; 8'; 8"; 8"'; 108) designed to co-operate with a support zone (9; 9'; 9"; 9"'; 109) of the work receptacle (1; 1'; 1"; 1"'; 101).

5. A food-preparation household electrical appliance according to claim 4, **characterized in that** the height of the shim (5; 5'; 5"; 5"'; 105) is greater than the distance between the support zone (9; 9'; 9"; 9"'; 109) and a position of the detection member (43; 143) in which the switch (42; 142) allows the appliance to operate, when the top housing (4; 104) is resting on the work receptacle (1; 1'; 1"; 1"'; 101) and when the intermediate safety lid (3; 3'; 3"; 3"'; 103) is not present.

6. A food-preparation household electrical appliance according to claim 4 or claim 5, **characterized in that** the intermediate safety lid (3; 3'; 3"; 3"') has an intermediate top abutment (52) designed to co-operate with a bottom abutment (47) of the top housing (4), the bottom abutment (47) being designed to co-operate with a top abutment (17; 17'; 17"; 17"') of the work receptacle (1; 1'; 1 "; 1"') when the intermediate safety lid (3; 3'; 3"; 3"') is not present, **in that** the height (H1) of the support zone (9; 9'; 9"; 9"') relative to the top abutment (17; 17'; 17"; 17"') is less than the height (H2) of the lowered position of the detection member (43) relative to the bottom abutment (47), and **in that** the height (H3) of the top bearing zone (7) relative to the intermediate top abutment (52) or to the top abutment (17; 17'; 17"; 17"') is greater than the height (H4) of the lowered position of the detection member (43) relative to the bottom abutment (47).

7. A food-preparation household electrical appliance according to any one of claims 4 to 6, **characterized in that** the top bearing zone (7"; 7"'; 107) is annular.

8. A food-preparation household electrical appliance according to any one of claims 4 to 7, **characterized in that** the support zone (9; 9') is provided on a lug (14; 14') of the work receptacle (1; 1').

9. A food-preparation household electrical appliance according to claim 8,
**characterized in that** the lug (14) is formed by a tongue arranged transversely on a top edge (12) of the work receptacle (1).

10. A food-preparation household electrical appliance according to claim 8 or claim 9, **characterized in that** the work receptacle (1) has an annular zone (15) at the periphery of the lug (14).

11. A food-preparation household electrical appliance according to any one of claims 1 to 10, **characterized in that** the intermediate safety lid (3; 3'; 3"; 3"'; 103) has a deformable portion (6; 6'; 6"; 6"'; 106), the shim (5; 5'; 5"; 5"'; 105) being connected to the deformable portion (6; 6'; 6"; 6"'; 106).

12. A food-preparation household electrical appliance according to claim 11, **characterized in that** the stiffness of the return means (46) is greater than the stiffness of the deformable portion (6; 6'; 6"; 6"').

13. A food-preparation household electrical appliance according to claim 11 or claim 12, **characterized in that** the intermediate safety lid (3; 3'; 3"; 3"'; 103) has a closure zone (30; 30'; 30"; 30"'; 103) designed to close the work receptacle (1; 1'; 1 "; 1"'; 101) at least partially, the deformable portion (6; 6'; 6"; 6"'; 106) being arranged between the shim (5, 5', 5", 5"'; 105) and the closure zone (30; 30'; 30"; 30"'; 130).

14. A food-preparation household electrical appliance according to any one of claims 11 to 13, **characterized in that** the deformable portion (6) has an inner side wall (37) and an outer side wall (38) designed to fit over a lug (14; 14') on the work receptacle (1; 1').

15. A food-preparation household electrical appliance according to any one of claims 11 to 14, **characterized in that** the intermediate safety lid (3; 103) has an outside collar (34; 134) arranged at the periphery of the deformable portion (6; 106).

16. A food-preparation household electrical appliance according to any one of claims 11 to 15, **characterized in that** the deformable portion (6; 6'; 6"'; 106) is made of an elastomer material.

17. A food-preparation household electrical appliance according to any one of claims 11 to 16, **characterized in that** the deformable portion (6"'; 106) is annular.

18. A food-preparation household electrical appliance according to any one of claims 11 to 17, **characterized in that** the intermediate safety lid (3; 3'; 3"') has a plurality of deformable portions (6; 6'; 6").

19. A food-preparation household electrical appliance according to any one of claims 11 to 17, **characterized in that** the intermediate safety lid (3"') is made of an elastomer material.

20. A food-preparation household electrical appliance according to any one of claims 1 to 19, **characterized in that** the intermediate safety lid (103) includes a gasket (153) provided with a deformable lip (155) resting on a setback (165) in the inside face of a side wall (161) of the work receptacle (101), the detection member (143) being suitable for being moved by the shim (105) towards the raised position when pressure deforming the lip (155) is exerted on the top housing (104).

21. A food-preparation household electrical appliance according to claim 20, **characterized in that** the lip (155) is annular.

22. A food-preparation household electrical appliance according to claim 20 or claim 21, **characterized in that** the lip (155) extends outwards.

23. A food-preparation household electrical appliance according to any one of claims 20 to 22, **characterized in that** the lip (155) is inclined downwards when the top housing (104) is resting on the intermediate safety lip (103).

24. A food-preparation household electrical appliance according to claim 23, **characterized in that** the lip (155) is curved upwards when pressure is exerted on the top housing (104).

25. A food-preparation household electrical appliance according to any one of claims 20 to 24, **characterized in that** the Shore hardness of the gasket (153) lies in the range 40 to 50.

26. A food-preparation household electrical appliance according to any one of claims 11 to 19 and to any one of claims 20 to 25, **characterized in that** the gasket (153) includes the deformable portion (106).

27. A food-preparation household electrical appliance according to any one of claims 1 to 26, **characterized in that** the rotary work tool (2) has a collar (60) extending below an opening (31) in the intermediate safety lid (3; 3'; 3"; 3"'; 103), the opening (31) being designed to pass the top end of the rotary work tool (2).

28. A food-preparation household electrical appliance according to any one of claims 1 to 27, **characterized in that** the shim (5, 5', 5", 5"'; 105) is mounted to slide or to pivot between a raised position and a lowered position.

## Patentansprüche

1. Elektrohaushaltsgerät zur Nahrungszubereitung mit einem Arbeitsbehälter (1;1'; 1"; 1"'; 101), einem Sicherheitszwischendeckel (3; 3'; 3"; 3"', 103), einem oberen Gehäuse (4; 104) zur Aufnahme eines Motors (40), der dazu vorgesehen ist, ein drehbares Arbeitswerkzeugs (2) in Drehung zu versetzen, das im Arbeitsbehälter (1; 1'; 1"; 1"'; 101) angeordnet ist, wobei der Motor (40) Steuermitteln (41; 141) zugeordnet ist, die im oberen Gehäuse (4, 104) aufgenommen sind, wobei die Steuermittel (41; 141) einen Schalter (42; 142) aufweisen, der durch ein Erfassungsorgan (43; 143) betätigt werden kann, das zwischen einer abgesenkten und einer angehobenen Stellung gegen ein Rückstellmittel (46; 146) beweglich angebracht ist, wobei der Sicherheitszwischendeckel (3; 3'; 3"; 3"', 103) einen Keil (5; 5'; 5"; 5"'; 105) zum Betätigen des Erfassungsorgans (43; 143) aufweist, **dadurch gekennzeichnet, dass** der Keil (5; 5'; 5"; 5"'; 105) schwimmend angebracht ist, wobei der Keil (5; 5'; 5"; 5"'; 105) zwischen einer abgesenkten und einer bezüglich eines Verschlussbereichs (30; 30'; 30"; 30"'; 130) des Sicherheitszwischendeckels (3; 3'; 3"; 3"'; 103) angehobenen Stellung beweglich ist, wobei der Keil (5; 5'; 5"; 5"'; 105) auf dem Arbeitsbehälter (1; 1'; 1"; 1"'; 101) aufliegen muss, um das Erfassungsorgan (43; 143) in die angehobene Stellung bringen zu können.

2. Elektrohaushaltsgerät zur Nahrungszubereitung nach Anspruch 1, **dadurch gekennzeichnet, dass** in Abwesenheit des Arbeitsbehälters (1:1'; 1"; 1"'; 101) der Keil (5; 5'; 5"; 5"'; 105) mit dem Erfassungsorgan (43; 143) zusammenwirken kann.

3. Elektrohaushaltsgerät zur Nahrungszubereitung nach einem der Ansprüche 1 oder 2, **dadurch gekennzeichnet, dass** der Sicherheitszwischendeckel (3, 103) einen oberen Zwischenanschlag (52; 152) aufweist, der zum Zusammenwirken mit einem unteren Anschlag (47; 147) des oberen Gehäuses (4; 104) vorgesehen ist.

4. Elektrohaushaltsgerät zur Nahrungszubereitung nach einem der Ansprüche 1 bis 3, **dadurch gekennzeichnet, dass** der Keil (5; 5'; 5"; 5"'; 105) einen oberen Anlagebereich (7; 7'; 7"; 7"'; 107) zum Zusammenwirken mit dem Erfassungsorgan (43; 143) und einen unteren Anlagebereich (8; 8'; 8"; 8"'; 108) zum Zusammenwirken mit einem Stützbereich (9; 9'; 9"; 9"'; 109) des Arbeitsbehälters (1; 1'; 1 "; 1"'; 101) aufweist.

5. Elektrohaushaltsgerät zur Nahrungszubereitung nach Anspruch 4, **dadurch gekennzeichnet, dass** die Höhe des Keils (5; 5'; 5"; 5"'; 105) größer ist als der Abstand, der den Stützbereich (9; 9'; 9"; 9"'; 109) von einer Stellung des Erfassungsorgans (43; 143) trennt, in welcher der Schalter (42; 142) den Betrieb des Geräts erlaubt, wenn das obere Gehäuse (4; 104) in Abwesenheit des Sicherheitszwischendeckels (3; 3'; 3"; 3"', 103) auf dem Arbeitsbehälter (1; 1'; 1"; 1"'; 101) aufliegt.

6. Elektrohaushaltsgerät zur Nahrungszubereitung nach einem der Ansprüche 4 oder 5, **dadurch gekennzeichnet, dass** der Sicherheitszwischendeckel (3; 3'; 3"; 3"') einen oberen Zwischenanschlag (52) zum Zusammenwirken mit einem unteren Anschlag (47) des oberen Gehäuses (4) aufweist, wobei der untere Anschlag (47) dazu vorgesehen ist, in Abwesenheit des Sicherheitszwischendeckels (3; 3'; 3"; 3"', 303) mit einem oberen Anschlag (17; 17'; 17"; 17"') des Arbeitsbehälters (1; 1'; 1"; 1"') zusammenzuwirken, dass die Höhe (H1) des Stützbereichs (9; 9'; 9"; 9"') bezüglich des oberen Anschlags (17; 17'; 17"; 17"') kleiner ist als die Höhe (H2) der abgesenkten Stellung des Erfassungsorgans (43) bezüglich des unteren Anschlags (47), und dass die Höhe (H3) des oberen Anlagebereichs (7) bezüglich des oberen Zwischenanschlags (52) oder des oberen Anschlags (17; 17'; 17"; 17"') größer ist als die Höhe (H4) der abgesenkten Stellung des Erfassungsbereichs (43) bezüglich des unteren Anschlags (47).

7. Elektrohaushaltsgerät zur Nahrungszubereitung nach einem der Ansprüche 4 bis 6, **dadurch gekennzeichnet, dass** der obere Anlagebereich (7"; 7"'; 107) ringförmig ist.

8. Elektrohaushaltsgerät zur Nahrungszubereitung nach einem der Ansprüche 4 bis 7, **dadurch gekennzeichnet, dass** der Stützbereich (9; 9') an einer Nase (14; 14') des Arbeitsbehälters (1; 1') angebracht ist.

9. Elektrohaushaltsgerät zur Nahrungszubereitung nach Anspruch 8, **dadurch gekennzeichnet, dass** die Nase (14) durch eine quer auf einem oberen Rand (12) des Arbeitsbehälters (1) angeordnete Zunge gebildet ist.

10. Elektrohaushaltsgerät zur Nahrungszubereitung nach einem der Ansprüche 8 oder 9, **dadurch gekennzeichnet, dass** der Arbeitsbehälter (1) einen ringförmigen Bereich (15) am Umfang der Nase (14) aufweist.

11. Elektrohaushaltsgerät zur Nahrungszubereitung nach einem der Ansprüche 1 bis 10, **dadurch gekennzeichnet, dass** der Sicherheitszwischendeckel (3; 3'; 3"; 3"', 103) einen verformbaren Teil (6; 6'; 6"; 6"'; 106) aufweist, wobei der Keil (5; 5'; 5"; 5"'; 105) mit dem verformbaren Teil (6; 6'; 6"; 6"'; 106) verbunden ist.

12. Elektrohaushaltsgerät zur Nahrungszubereitung nach Anspruch 11, **dadurch gekennzeichnet, dass** die Steifigkeit des Rückstellmittels (46) höher ist als die Steifigkeit des verformbaren Teils (6; 6'; 6"; 6"'; 106).

13. Elektrohaushaltsgerät zur Nahrungszubereitung nach einem der Ansprüche 11 oder 12, **dadurch gekennzeichnet, dass** der Sicherheitszwischendeckel (3; 3'; 3"; 3"', 103) einen Verschlussbereich (30; 30'; 30"; 30"', 130) aufweist, der dazu vorgesehen ist, den Arbeitsbehälter (1; 1'; 1"; 1"'; 101) mindestens teilweise zu verschließen, wobei der verformbare Teil (6; 6'; 6"; 6"'; 106) zwischen dem Keil (5; 5'; 5"; 5"'; 105) und dem Verschlussbereich (30; 30'; 30"; 30"', 130) angeordnet ist.

14. Elektrohaushaltsgerät zur Nahrungszubereitung nach einem der Ansprüche 11 bis 13, **dadurch gekennzeichnet, dass** der verformbare Teil (6) eine innere Seitenwand (37) und eine äußere Seitenwand (38) aufweist, die zum Überdecken einer Nase (14; 14') des Arbeitsbehälters (1; 1') vorgesehen ist.

15. Elektrohaushaltsgerät zur Nahrungszubereitung nach einem der Ansprüche 11 bis 14, **dadurch gekennzeichnet, dass** der Sicherheitszwischendeckel (3; 103) einen Außenbund (34; 134) aufweist, der am Umfang des verformbaren Teils (6; 106) angeordnet ist.

16. Elektrohaushaltsgerät zur Nahrungszubereitung nach einem der Ansprüche 11 bis 15, **dadurch gekennzeichnet, dass** der verformbare Teil (6; 6'; 6"'; 106) aus Elastomermaterial besteht.

17. Elektrohaushaltsgerät zur Nahrungszubereitung nach einem der Ansprüche 11 bis 16, **dadurch gekennzeichnet, dass** der verformbare Teil (6"'; 106) ringförmig ist.

18. Elektrohaushaltsgerät zur Nahrungszubereitung nach einem der Ansprüche 11 bis 17, **dadurch gekennzeichnet, dass** der Sicherheitszwischendeckel (3; 3'; 3") mehrere verformbare Teile (6; 6'; 6") aufweist.

19. Elektrohaushaltsgerät zur Nahrungszubereitung nach einem der Ansprüche 11 bis 17, **dadurch gekennzeichnet, dass** der Sicherheitszwischendeckel (3") aus Elastomermaterial besteht.

20. Elektrohaushaltsgerät zur Nahrungszubereitung nach einem der Ansprüche 1 bis 19, **dadurch gekennzeichnet, dass** der Sicherheitszwischendeckel (103) eine Dichtung (153) mit einer verformbaren Lippe (155) aufweist, die auf einem Absatz (165) der Innenseite einer Seitenfläche (161) des Arbeitsbehälters (101) aufliegt, wobei das Erfassungsorgan (143) durch den Keil (105) in die angehobene Stellung verlagert werden kann, wenn ein die Lippe (155) verformender Druck auf das obere Gehäuse (104) ausgeübt wird.

21. Elektrohaushaltsgerät zur Nahrungszubereitung nach einem Anspruch 20, **dadurch gekennzeichnet, dass** die Lippe (155) ringförmig ist.

22. Elektrohaushaltsgerät zur Nahrungszubereitung nach einem der Ansprüche 20 oder 21, **dadurch gekennzeichnet, dass** sich die Lippe (155) nach außen erstreckt.

23. Elektrohaushaltsgerät zur Nahrungszubereitung nach einem der Ansprüche 20 bis 22, **dadurch gekennzeichnet, dass** die Lippe (155) nach unten geneigt ist, wenn das obere Gehäuse (104) auf dem Sicherheitszwischendeckel (103) aufliegt.

24. Elektrohaushaltsgerät zur Nahrungszubereitung nach einem Anspruch 23, **dadurch gekennzeichnet, dass** die Lippe (155) nach oben gewölbt ist, wenn ein Druck auf das obere Gehäuse (104) ausgeübt wird.

25. Elektrohaushaltsgerät zur Nahrungszubereitung nach einem der Ansprüche 20 bis 24, **dadurch gekennzeichnet, dass** die Härte der Dichtung (153) zwischen 40 und 50 Shore beträgt.

26. Elektrohaushaltsgerät zur Nahrungszubereitung nach einem der Ansprüche 11 bis 19 und einem der Ansprüche 20 bis 25, **dadurch gekennzeichnet, dass** die Dichtung (153) den verformbaren Teil (106) aufweist.

27. Elektrohaushaltsgerät zur Nahrungszubereitung nach einem der Ansprüche 1 bis 26, **dadurch gekennzeichnet, dass** das drehbare Arbeitswerkzeug (2) einen Bund (60) aufweist, der sich unterhalb einer Öffnung (31) des Sicherheitszwischendeckels (3; 3'; 3"; 3"'; 103) erstreckt, wobei die Öffnung (31) für den Durchgang des oberen Endes des drehbaren Arbeitswerkzeugs (2) vorgesehen ist.

28. Elektrohaushaltsgerät zur Nahrungszubereitung nach einem der Ansprüche 1 bis 27, **dadurch gekennzeichnet, dass** der Keil (5; 5'; 5"; 5"'; 105) zwischen einer angehobenen und einer abgesenkten Stellung gleitend oder schwenkbar angeordnet ist.
